# EUROPÄISCHE PATENTSCHRIFT

(11) **EP 2 664 506 B1**
(45) Veröffentlichungstag und Bekanntmachung des Hinweises auf die Patenterteilung: **12.04.2017**
(21) Anmeldenummer: 13156490.8
(22) Anmeldetag: 25.02.2013
(51) Int. Cl.: B60T 7/20, B60T 8/17, F16H 61/21

(54) **Fahrzeug mit einem hydrostatischen Fahrantrieb**
Vehicle with a hydrostatic traction drive
Véhicule doté d'un entraînement de roulement hydrostatique

(30) Priorität: 02.05.2012 DE 102012008528
(43) Veröffentlichungstag der Anmeldung: 20.11.2013
(73) Patentinhaber: CLAAS Selbstfahrende Erntemaschinen GmbH, 33428 Harsewinkel (DE)
(72) Erfinder: Rüther, Michael, 33428 Harsewinkel (DE); Widemann, Axel, 24539 Neumünster (DE)

(56) Entgegenhaltungen:
- EP-A1- 2 384 941

## Beschreibung

Die vorliegende Erfindung betrifft ein Fahrzeug mit einem hydrostatischen Fahrantrieb gemäß dem Oberbegriff von Anspruch 1, einen Lastzug mit einem solchen Fahrzeug und mindestens einem an das Fahrzeug angekoppelten Anhänger gemäß dem Oberbegriff von Anspruch 13 und ein Verfahren für den Betrieb eines solchen Fahrzeugs mit einem hydrostatischen Fahrantrieb gemäß dem Oberbegriff von Anspruch 14.

Bei dem in Rede stehenden Fahrzeug mit einem hydrostatischen Fahrantrieb steht vorliegend der Anwendungsbereich mobiler landwirtschaftlicher Arbeitsmaschinen im Vordergrund, was nicht beschränkend zu verstehen ist. Bei solchen Arbeitsmaschinen handelt es sich beispielsweise um Traktoren, Hoflader, insbesondere Teleskoplader, aber auch um selbstfahrende Erntemaschinen o. dgl..

Das bekannte Fahrzeug (EP 2 384 941 A1), von dem die Erfindung ausgeht, ist in üblicher Weise mit einem hydrostatischen Fahrantrieb und einer Betriebsbremse ausgestattet. Der Fahrantrieb weist ein Hydrostatgetriebe mit Hydrostatpumpe und Hydrostatmotor auf, die in einem geschlossenen hydraulischen Kreislauf angeordnet sind. Die Hydrostatpumpe wird dabei regelmäßig von einem Dieselaggregat angetrieben. Bei dem Hydrostatgetriebe handelt es sich um ein Getriebe mit stufenlos einstellbarer Drehzahl-Übersetzung (CVT-Getriebe). Die Einstellung der Drehzahl-Übersetzung erfolgt hier durch eine entsprechende Einstellung des Schluckvolumens der Hydrostatpumpe oder des Hydrostatmotors.

Das Hydrostatgetriebe des obigen Fahrzeugs stellt die bekannte Funktion einer "Inchbremse" bereit, die im Wesentlichen auf die Bremswirkung des Dieselaggregates zurückgeht. Die Betätigung der Inchbremse erfolgt durch eine entsprechende Veränderung der Drehzahlübersetzung des Hydrostatgetriebes, und zwar derart, dass das Dieselaggregat während der Inchbremsung über den Antriebsstrang angetrieben wird und entsprechend bremsend wirkt.

Um das bekannte Fahrzeug auch für Transportaufgaben einsetzen zu können, lässt sich an das Fahrzeug ein Anhänger ankoppeln. Der Anhänger ist mit einer vom Fahrzeug aus betätigbaren Anhängerbremse ausgestattet, deren Bremskreis beim Ankoppeln des Anhängers an das Fahrzeug über den Bremskreis der Betriebsbremse des Fahrzeugs versorgt wird.

In der EP 2 384 941 A1 ist bereits erkannt worden, dass eine Betätigung der Inchbremse grundsätzlich mit einem ungewünschten Aufschieben des Anhängers auf das Fahrzeug einhergeht, noch bevor die Betriebsbremse und damit die Anhängerbremse in Aktion kommt. Entsprechend wird dort vorgeschlagen, ein bereits erfolgtes Aufschieben des Anhängers auf das Fahrzeug sensorisch zu erfassen und in Abhängigkeit von dieser Erfassung eine gezielte Betätigung der Anhängerbremse auszulösen.

Nachteilig bei dem bekannten Fahrzeug ist die Tatsache, dass dort auf das an sich ungewünschte Aufschieben des Anhängers lediglich reagiert werden kann. Die dort vorgeschlagene Lösung kann daher denkgesetzlich nur einen Kompromiß darstellen.

Der Erfindung liegt das Problem zugrunde, das bekannte Fahrzeug derart auszugestalten und weiterzubilden, dass ein Aufschieben des Anhängers auf das Fahrzeug insbesondere bei einer Inchbremsung mit einfachen konstruktiven Mitteln vermieden wird.

Das obige Problem wird bei einem Fahrzeug gemäß dem Oberbegriff von Anspruch 1 durch die Merkmale des kennzeichnenden Teils von Anspruch 1 gelöst.

Wesentlich ist die grundsätzliche Überlegung, dass ein Aufschieben des Anhängers auf das Fahrzeug während einer Inchbremsung am effektivsten dadurch vermieden werden kann, dass bereits die Inchbremsung als solche eine vorbestimmte Anhängerbremsung auslöst, selbst wenn die Betriebsbremse noch nicht betätigt ist. Der vorschlagsgemäße Zusammenhang zwischen Inchbremsung und Anhängerbremsung kann permanent oder nur in einem vorbestimmten Betriebsmodus vorgesehen sein.

Der Begriff "Inchbremsung" umfaßt hier im Hinblick auf das Auslösen der Anhängerbremsung alle im Rahmen des Gesamtvorgangs der Inchbremsung stattfindenden Teilvorgänge. Jeder dieser Teilvorgänge der Inchbremsung kann vorschlagsgemäß den Auslösezeitpunkt und den Verlauf der Anhängerbremsung bestimmen. Dazu gehören beispielsweise die Inchbetätigung mittels eines Brems-Bedienelements, die Ansteuerung der Hydrostatpumpe bzw. des Hydrostatmotors oder die im Rahmen der Inchbremsung physikalisch erzeugte Bremswirkung.

Bei der Auslegung des Begriffs "Inchbremsung" ist ferner zu berücksichtigen, dass die Ansteuerung der Hydrostatpumpe bzw. des Hydrostatmotors und/oder die physikalisch erzeugte Bremswirkung bei einer bestimmten Inchbetätigung steuerungstechnisch variiert werden kann. Beispielsweise kann die bremsende Ansteuerung der Hydrostatpumpe bzw. des Hydrostatmotors zurückgefahren werden, wenn eine Überlast des Hydrostatgetriebes droht. Dies kann beispielsweise beim Abfahren eines starken Gefälles der Fall sein. So kann es im Extremfall auftreten, dass eine Inchbremsung im vorliegenden Sinne zwar eine starke Inchbetätigung mittels eines Brems-Bedienelements, aber nur eine schwache oder sogar überhaupt keine bremsende Ansteuerung Hydrostatpumpe bzw. des Hydrostatmotors umfaßt. Dennoch ist es dabei vorschlagsgemäß vorgesehen, dass die Anhängerbremsung in Abhängigkeit von der Inchbetätigung wie oben angegeben ausgelöst wird.

Bei der bevorzugten Ausgestaltung gemäß Anspruch 2 steht die inchbremsenbedingte Anhängerbremsung zumindest phasenweise in einem im Wesentlichen proportionalen Zusammenhang zu der auslösenden Inchbremsung, insbesondere zu einer entsprechenden bedienerseitigen Inchbetätigung. Dies trägt insbesondere dem Umstand Rechnung, dass einer Inchbremsung von bestimmter Größe eine Anhängerbremsung mit einer entsprechenden Größe gegenüberstehen sollte, um sicherzustellen, dass der Lastzug aus Fahrzeug und Anhänger gestreckt bleibt.

Zur bedienerseitigen Inchbetätigung ist vorzugsweise ein Brems-Bedienelement vorgesehen, dem eine elektrische Sensoranordnung zugeordnet ist (Anspruch 3). In einer bevorzugten Variante ist die Basis für den obigen proportionalen Zusammenhang die Auslenkung des Brems-Bedienelements, was konstruktiv und steuerungstechnisch zu einer einfachen Realisierung führt.

Bei der besonders bevorzugten Ausgestaltung gemäß Anspruch 4 ist eine Sensoranordnung zur sensorischen Erfassung der obigen Auslenkung des Brems-Bedienelements vorgesehen, die gemäß Anspruch 5 von der Fahrzeugsteuerung ausgewertet wird. Die Fahrzeugsteuerung löst dabei nach einer vorbestimmten Übertragungsfunktion die jeweilige Anhängerbremsung aus. Damit ist die Ermittlung der Anhängerbremsung leicht auf verschiedenste Randbedingungen anpaßbar.

Die bevorzugte Ausgestaltung gemäß Anspruch 6 betrifft beispielsweise die Auswahl einer Übertragungsfunktion aus einer Anzahl gespeicherter Übertragungsfunktionen bzw. die Parametrierung einer ggf. ausgewählten Übertragungsfunktion, jeweils in Abhängigkeit von mindestens einem bremsrelevanten Einflussfaktor. Hiermit lassen sich die Möglichkeiten der steuerungstechnischen Umsetzung der vorschlagsgemäßen Lösung voll ausnutzen. Insbesondere ist es möglich, als bremsrelevanten Einflussfaktor die aktuelle Anhängerlast heranzuziehen (Anspruch 7).

Bei den weiter bevorzugten Ausgestaltungen gemäß den Ansprüchen 8 und 9 geht einer bedienerseitigen Betriebsbremsung durch die Betriebsbremse stets eine Inchbremsung und damit eine entsprechende Anhängerbremsung voraus. Damit ist sichergestellt, dass der Anhänger bereits angebremst ist, bevor die verglichen mit der Inchbremsung bei entsprechender Betätigung sehr viel stärkere Betriebsbremsung stattfindet.

Bei der weiter bevorzugten Ausgestaltung gemäß Anspruch 10 löst auch eine Betriebsbremsung als solche eine vorbestimmte Anhängerbremsung aus, wobei die betriebsbremsenbedingte Anhängerbremsung unabhängig von der inchbremsenbedingten Anhängerbremsung auslösbar ist. Durch diese Unabhängigkeit lässt sich die Anhängerbremsung je nach bedienerseitig betätigter Bremse optimal ansteuern. Der Begriff "Betriebsbremsung" ist in diesem Zusammenhang ebenso weit auszulegen wie der oben erläuterte Begriff "Inchbremsung".

Nach einer weiteren Lehre gemäß Anspruch 14, der eigenständige Bedeutung zukommt, wird ein Lastzug mit einem vorschlagsgemäßen Fahrzeug und mit mindestens einem an das Fahrzeug angekoppelten Anhänger beansprucht. Auf alle Ausführungen zu dem vorschlagsgemäßen Fahrzeug, die geeignet sind, den Lastzug insgesamt zu beschreiben, darf verwiesen werden.

Nach einer weiteren Lehre gemäß Anspruch 15, der ebenfalls eigenständige Bedeutung zukommt, wird ein Verfahren für den Betrieb eines vorschlagsgemäßen Fahrzeugs beansprucht. Auch diesbezüglich darf auf alle Ausführungen zu dem vorschlagsgemäßen Fahrzeug verwiesen werden.

Im Folgenden wir die Erfindung anhand einer lediglich ein Ausführungsbeispiel darstellenden Zeichnung näher erläutert. In der Zeichnung zeigt:
- Fig. 1: an der Bremsung eines vorschlagsgemäßen Fahrzeugs und eines daran angekoppelten Anhängers beteiligte Komponenten einschließlich der zugeordneten funktionalen Zusammenhänge,
- Fig. 2: an der inchbremsenbedingten Anhängerbremsung beteiligten Komponenten des Fahrzeugs und Anhängers gemäß Fig. 1 einschließlich der zugeordneten elektro-hydrostatischen Verbindungen,
- Fig. 3: eine vorschlagsgemäße Abhängigkeit der Anhängerbremsung von der Auslenkung des Brems-Bedienelements eines vorschlagsgemäßen Fahrzeugs gemäß Fig. 1 in einer ganz schematischen Ansicht.

Das vorschlagsgemäße Fahrzeug 1 lässt sich in einer Vielzahl von Anwendungsbereichen einsetzen, insbesondere im Bereich der landwirtschaftlichen Arbeitsmaschinen. Auf die beispielhafte Auszählung im einleitenden Teil der Beschreibung darf verwiesen werden.

Das vorschlagsgemäße Fahrzeug 1 ist mit einem hydrostatischen Fahrantrieb 2 und mit einer Betriebsbremse 3 ausgestattet. Der hydrostatische Fahrantrieb 2 dient in erster Linie dem Vortrieb des Fahrzeugs 1, kann aber auch für die Versorgung hydraulischer Arbeitsgeräte Anwendung finden. Mittels der Betriebsbremse 3 lässt sich das Fahrzeug 1 bedarfsweise bis zum Stillstand abbremsen. Bei der Betriebsbremse 3 handelt es sich vorzugsweise um eine hydraulisch betätigte Reibbremse. Alternativ kann die Betriebsbremse 3 aber auch zumindest zum Teil pneumatisch arbeiten.

Im Fahrantriebsstrang weist der Fahrantrieb 2 ein Hydrostatgetriebe 4 auf, das in an sich bekannter Weise antriebsseitig eine Hydrostatpumpe 5 und abtriebsseitig einen Hydrostatmotor 6 aufweist, die in einem geschlossenen hydrostatischen Kreislauf angeordnet sind. Die Hydrostatpumpe 5 wird hier und vorzugsweise von einem nicht dargestellten Dieselaggregat angetrieben. Das Hydrostatgetriebe 4 kann grundsätzlich auch mehr als eine Hydrostatpumpe 5 und mehr als einen Hydrostatmotor 6 aufweisen.

Vorschlagsgemäß stellt das Hydrostatgetriebe 4 die Funktion einer Inchbremse bereit, die jedenfalls auch separat von der Betriebsbremse 3 betätigbar ist. Die Inchbremsung geht, wie weiter oben erläutert, auf eine Veränderung der Drehzahlübersetzung des Hydrostatgetriebes 4 und damit auf die Bremswirkung des nicht dargestellten Dieselaggregates zurück. Die Inchbremsung lässt sich also bei entsprechender Verstellbarkeit der Hydrostatpumpe 5 des Hydrostatmotors 6 weitgehend steuerungstechnisch realisieren. Anders ist es bei der Betriebsbremse 3, bei der es sich wie oben angesprochen regelmäßig um eine hydraulisch oder pneumatisch betätigte Reibbremse handelt.

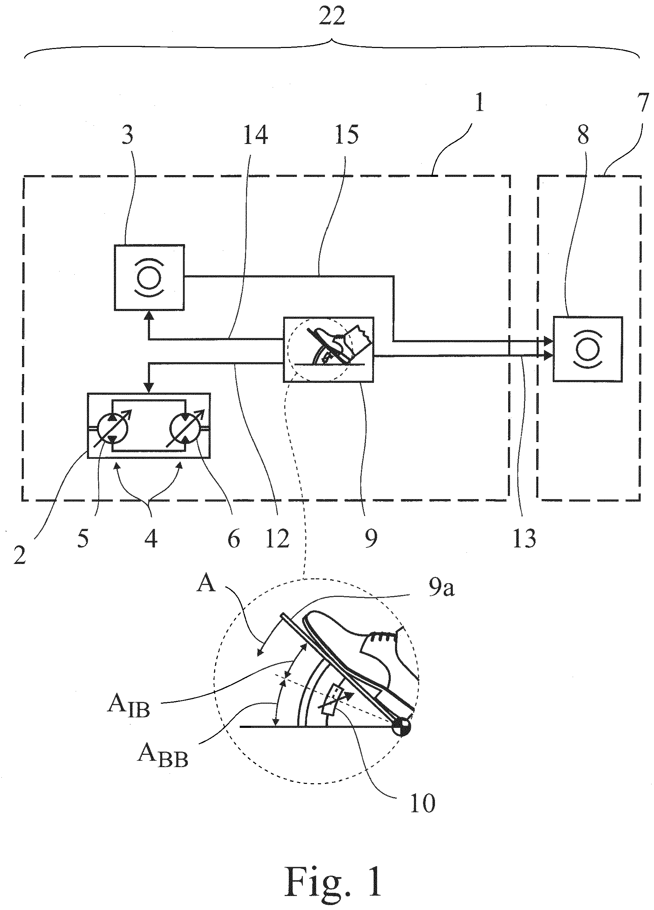

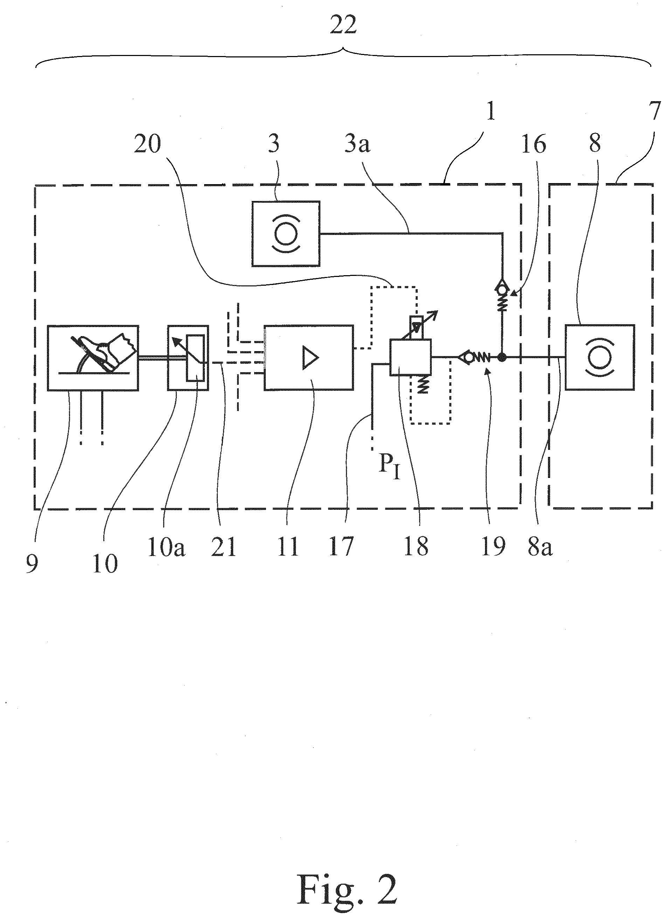

Die separate Betätigbarkeit der Inchbremse ist beispielsweise beim Hinabfahren von Gefällen vorteilhaft, da die Inchbremsung weitgehend verschleißfrei ist. Allerdings lässt sich mit der Inchbremsung kein "punktgenauer" Stillstand des Fahrzeugs erreichen, so dass sich die kombinierte Realisierung von Inchbremsung und Betriebsbremsung in der Praxis durchgesetzt hat. In den Fig. 1 und 2 angedeutet ist die Tatsache, dass ein Anhänger 7 an das Fahrzeug 1 ankoppelbar ist, wobei der Anhänger 7 eine vom Fahrzeug 1 aus betätigbare Anhängerbremse 8 aufweist. Bei der Anhängerbremse 8 handelt es sich - wie bei der Betriebsbremse 3 - regelmäßig um eine hydraulisch oder pneumatisch betätigte Reibbremse.

Wesentlich ist nun, dass zumindest in einem vorbestimmten Betriebsmodus und bei angekoppeltem Anhänger 7 eine Inchbremsung als solche eine vorbestimmte Anhängerbremsung auslöst.

Der Begriff "Inchbremsung" ist in oben erläuterter Weise weit zu verstehen. Er umfasst insbesondere auch eine noch zu erläuternde bedienerseitige Inchbetätigung. In diesem Zusammenhang darf allerdings darauf hingewiesen werden, dass die in Rede stehende Inchbremsung nicht notwendigerweise bedienerseitig ausgelöst sein muss. Denkbar ist beispielsweise, dass die Inchbremsung rein steuerungstechnisch erfolgen kann, insbesondere im Rahmen einer Tempomatfunktion.

Vorzugsweise steht die inchbremsenbedingte Anhängerbremsung zumindest phasenweise in einem im Wesentlichen proportionalen Zusammenhang zu der auslösenden Inchbremsung, was angesichts des zu vermeidenden Aufschiebens des Anhängers auf das Fahrzeugs wie oben angesprochen auch sachgerecht erscheint. Hier und vorzugsweise ist es im Einzelnen so, dass eine noch zu erläuternde, bedienerseitige Inchbetätigung, also der Grad der Inchbetätigung, die Basis für den obigen proportionalen Zusammenhang bildet.

Grundsätzlich kann es vorgesehen sein, dass die vorschlagsgemäße Funktion der inchbremsenbedingten Anhängerbremsung permanent aktiviert ist. Denkbar ist aber auch, dass diese Funktion nur in einem vorbestimmten Betriebsmodus des Fahrzeugs 1 aktiviert ist. Hierfür könnte beispielsweise ein Betriebsartenschalter vorgesehen sein, der bedienerseitig betätigbar ist. Denkbar ist auch, dass der vorbestimmte Betriebsmodus steuerungstechnisch selbsttätig eingestellt wird, beispielsweise stets nach dem Anfahren des Fahrzeugs.

Um einem Aufschieben des Anhängers 7 auf das Fahrzeug 1 möglichst vorzubeugen, ist es vorzugsweise so, dass eine Inchbremsung, vorzugsweise die bedienerseitige Inchbetätigung, als solche im Wesentlichen verzögerungsfrei eine Anhängerbremsung auslöst.

Es lässt sich der Darstellung gemäß Fig. 1 die Tatsache entnehmen, dass hier und vorzugsweise ein auslenkbares Brems-Bedienelement 9 zur bedienerseitigen Inchbetätigung vorgesehen ist, das in besonders bevorzugter Ausgestaltung auch der bedienerseitigen Betätigung der Betriebsbremse 3 dient. Grundsätzlich kann es sich bei dem Brems-Bedienelement 9 um einen Bremshebel handeln. Hierzu und vorzugsweise ist das Brems-Bedienelement ein Bremspedal mit einem verschwenkbaren Pedalelement 9a.

Dem Brems-Bedienelement 9 ist eine elektrische Sensoranordnung 10 zur sensorischen Erfassung der Inchbetätigung, hier der Auslenkung A des Brems-Bedienelements 9, zugeordnet. Für die Ausgestaltung der Sensoranordnung 10 sind zahlreiche vorteilhafte Varianten denkbar. Beispielsweise kann die Sensoranordnung 10 einen Absolutsensor, insbesondere nach Art eines Potentiometers 10a oder eines magnetorestriktiven MR-Sensors, aufweisen. Alternativ kann die Sensoranordnung 10 auch einen inkrementellen Sensor, insbesondere nach Art eines Hall-Sensors oder dgl., der mit einem Permanentmagneten zusammenwirkt, aufweisen. Vorliegend weist die Sensoranordnung 10 ein Potentiometer 10a auf, das zur Ermittlung der Auslenkung A mechanisch mit dem Brems-Bedienelement 9 gekoppelt ist.

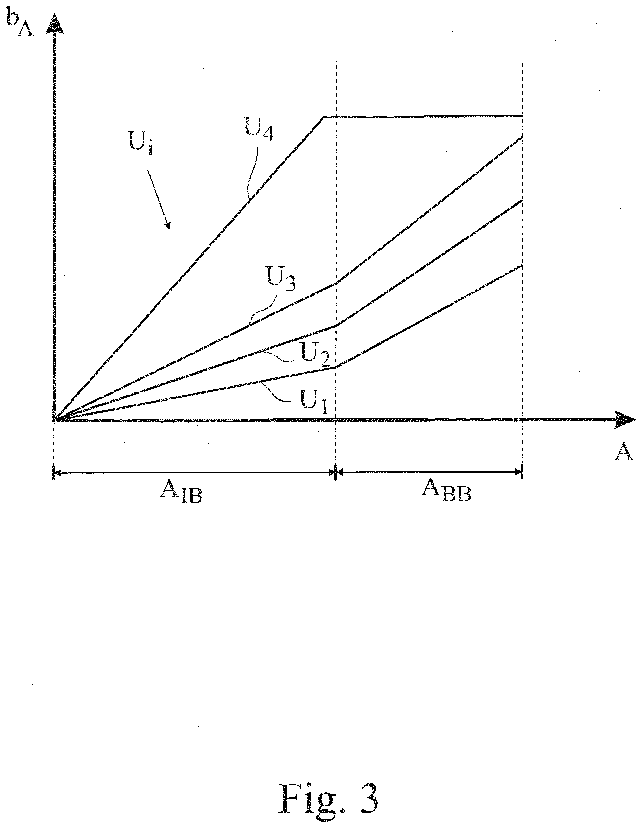

Die inchbremsenbedingte Anhängerbremsung geht vorzugsweise nach einer vorbestimmten Übertragungsfunktion Uᵢ in Abhängigkeit von der Inchbremsung vonstatten. Die Übertragungsfunktion Uᵢ ist in Fig. 3 angedeutet und wird weiter unten noch erläutert.

Nach der Übertragungsfunktion Uᵢ geht vorzugsweise eine Steigerung der Inchbremsung stets mit einer Steigerung der Anhängerbremsung einher. In besonders bevorzugter Ausgestaltung weist die Übertragungsfunktion Uᵢ zumindest einen im Wesentlichen linearen Anteil auf, wobei hier und vorzugsweise die Übertragungsfunktion Uᵢ sogar insgesamt eine im Wesentlichen lineare Funktion ist. Hier und vorzugsweise bedeutet dies, dass die inchbremsenbedingte Anhängerbremsung im Wesentlichen proportional zu der bedienerseitigen Inchbetätigung ist.

Das Fahrzeug ist vorzugsweise mit einer Fahrzeugsteuerung 11 versehen, bei der es sich um eine zentrale Fahrzeugsteuerung 11 oder um eine in verschiedene dezentrale Teilsteuerungen unterteilte Fahrzeugsteuerung handeln kann. Die Fahrzeugsteuerung 11 ist u.a. mit der Sensoranordnung 10 gekoppelt und löst eine Anhängerbremsung nach der vorbestimmten Übertragungsfunktion Uᵢ in Abhängigkeit von einer Inchbremsung und ggf. in Abhängigkeit von einer noch zu erläuternden Betriebsbremsung aus. Dieses Auslösen der Anhängerbremsung erfolgt hier und vorzugsweise in Abhängigkeit von den Sensordaten der Sensoranordnung 10 des Brems-Bedienelements 9.

Die Inchbremsung selbst kann sich dadurch ergeben, dass das Brems-Bedienelement 9 zusätzlich mit einem Hydraulikventil ausgestattet ist, das eine entsprechende Kopplung zu einem Steuereingang der Hydrostatpumpe 9 bzw. des Hydrostatmotors 6 bereitstellt. Hier und vorzugsweise ist es allerdings so, dass die Sensoranordnung 10 auch die Inchbremsung umsetzt. Die hierfür erforderliche Logik ist in der Fahrzeugsteuerung 11 implementiert, die basierend auf den Sensordaten der Sensoranordnung 10 eine entsprechende Ansteuerung von Hydrostatpumpe 5 und Hydrostatmotor 6 vornimmt.

Dadurch, dass die inchbremsenbedingte Anhängerbremsung bei dem dargestellten Ausführungsbeispiel in der Fahrzeugsteuerung 11 vorgenommen wird, lässt sich die in Rede stehende Übertragungsfunktion Uᵢ besonders flexibel umsetzen. Vorzugsweise wird als Basis für die Ermittlung der auszulösenden Anhängerbremsung eine Übertragungsfunktion Uᵢ aus einer Anzahl gespeicherter Übertragungsfunktionen ausgewählt und/oder eine ggf. ausgewählte Übertragungsfunktion Uᵢ parametriert. Denkbar ist hier, dass anstelle der Auswahl einer Übertragungsfunktion Uᵢ lediglich eine einzige Übertragungsfunktion Uᵢ vorgesehen ist, die jeweils auf den aktuellen Anwendungsfall parametriert wird. Die Auswahl der Übertragungsfunktion Uᵢ sowie die Parametrierung der Übertragungsfunktion Uᵢ werden in Abhängigkeit von mindestens einem bremsrelevanten Einflussfaktor vorgenommen.

Eine bevorzugte Variante besteht darin, dass eine Sensoranordnung zur sensorischen Ermittlung der aktuellen Anhängerlast vorgesehen ist und dass die Fahrzeugsteuerung 11 die Sensordaten der Senoranordnung als bremsrelevanten Einflussfaktor auswertet. Denkbar ist aber auch, dass ein vorzugsweise mit der Fahrzeugsteuerung 11 gekoppeltes Einstell-Bedienelement zur bedienerseitigen Einstellung der aktuellen Anhängerlast vorgesehen ist, wobei die Stellung des Einstell-Bedienelements dann als bremsrelevanter Einflussfaktor ausgewertet wird. Das Einstell-Bedienelement kann beispielsweise in die wesentlichen Stellungen, beispielsweise in die Stellungen "leer", "halb", "voll" bringbar sein. Denkbar ist auch, dass das Einstell-Bedienelement eine stufenlose Einstellung erlaubt.

Die in Fig. 1 gezeigte Ausgestaltung des Brems-Bedienelements 9 sorgt dafür, dass einer bedienerseitigen Betriebsbremsung mittels des Brems-Bedienelements 9 stets eine Inchbremsung und damit eine vorschlagsgemäße, entsprechende Anhängerbremsung vorausgeht. Vor der potentiell starken Betriebsbremsung findet also stets ein Anbremsen des Anhängers 7 statt, was dem ungewünschten Aufschieben des Anhängers auf das Fahrzeug vorteilhafterweise entgegenwirkt.

Die Detailansicht gemäß Fig. 1 zeigt, dass das Brems-Bedienelement 9 über einen ersten Auslenkbereich A_{IB} und über einen zweiten Auslenkbereich A_{BB} auslenkbar ist, wobei sich die Auslenkbereiche A_{IB} und A_{BB} aneinander anschließen.

Eine Auslenkung A des Brems-Bedienelements 9 über den ersten Auslenkbereich A_{IB} ist hier eine Inchbetätigung, wobei eine weitergehende Auslenkung A des Brems-Bedienelements 9 über einen zweiten Auslenkbereich A_{BB}, hier und vorzugsweise zusätzlich zu der Inchbetätigung, eine Betätigung der Betriebsbremse 3 darstellt. Vorzugsweise ist eine Auslenkung des Brems-Bedienelements 9 also in beiden Auslenkbereichen A_{IB}, A_{BB} jedenfalls eine Inchbetätigung.

Mit der obigen Ausgestaltung des Brems-Bedienelements 9 ist also eine Inchbetätigung möglich, ohne dass die Betriebsbremse 3 betätigt wird. Dies ist vorteilhaft, wenn besonders feinfühlige Bremsoperationen durchgeführt werden sollen oder wenn, wie oben angesprochen, die Hinabfahrt eines Gefälles gebremst werden soll. Vorteilhafterweise steht bzw. stehen die Inchbremsung und ggf. die Betriebsbremsung jeweils in einem vorbestimmten Zusammenhang zu der Auslenkung des Brems-Bedienelements 9. Vorzugsweise kommen hier Übertragungsfunktionen mit einem im Wesentlichen linearen Anteil zum Tragen derart, dass mit zunehmender Auslenkung A des Brems-Bedienelements 9 eine insbesondere proportional zunehmende Inchbremsung bzw. Betriebsbremsung erfolgt.

Interessant ist nun die Tatsache, dass in einer bevorzugten Ausführungsform die Anhängerbremsung nicht nur durch eine Inchbremsung, sondern auch durch eine Betriebsbremsung ausgelöst wird. In einer besonders bevorzugten Ausführungsform ist es nun so, dass die betriebsbremsenbedingte Anhängerbremsung weitgehend unabhängig von der inchbremsenbedingten Anhängerbremsung auslösbar ist. Dieser Zusammenhang ergibt sich aus der Darstellung gemäß Fig. 1. Eine erste Auslenkung des Brems-Bedienelements 9 wirkt sich gemäß Funktionspfeil 12 auf das Hydrostatgetriebe 4 aus, so dass eine Inchbremsung stattfindet. Die Inchbetätigung wirkt aber nicht nur auf das Hydrostatgetriebe 4, sondern auch auf die Anhängerbremse 8, was in Fig. 1 mit dem Funktionspfeil 13 angedeutet ist.

Eine weitere Auslenkung des Brems-Bedienelements 9 über den Auslenkbereich A_{IB} hinaus ist hier zusätzlich eine Betätigung der Betriebsbremse 3. Dies ist durch den Funktionspfeil 14 angedeutet. Die Betriebsbremse 3 wiederum wirkt in noch zu erläuternder Weise und unabhängig von der Inchbremse auf die Anhängerbremse 8, was sich andeutungsweise durch den Funktionspfeil 15 ergibt.

Vorzugsweise gehen die betriebsbremsenbedingte Anhängerbremsung und die inchbremsenbedingte Anhängerbremsung auf unterschiedliche Versorgungskreise zurück. Mit "Versorgungskreis" ist hier die jeweilige Anordnung gemeint, welche die für die Anhängerbremsung erforderliche Bremsenergie bereitstellt. Bei dem Versorgungskreis handelt es sich vorzugsweise zumindest teilweise um einen hydraulischen oder pneumatischen Versorgungskreis.

Für den Fall, dass sowohl die Betriebsbremse 3 als auch die Anhängerbremse 8 als hydraulisch betätigte Reibbremsen ausgestaltet sind, ist es in einer besonders einfach zu realisierenden Ausführungsform so, dass für die betriebsbremsenbedingte Anhängerbremsung der Bremskreis 8a der Anhängerbremse 8 an den Bremskreis 3a der Betriebsbremse 3 gekoppelt ist, wobei die Kopplung hier und vorzugsweise unidirektional von dem Bremskreis 3a der Betriebsbremse 3 zu dem Bremskreis 8a der Anhängerbremse 8 hin vorgesehen ist. Diese unidirektionale Kopplung ist in dem in Fig. 2 dargestellten Ausführungsbeispiel durch ein Rückschlagventil 16 realisiert.

Für die inchbremsenbedingte Anhängerbremsung ist der Bremskreis 8a der Anhängerbremse 8 an einen von der Betriebsbremse 3, insbesondere vom Bremskreis 3a der Betriebsbremse 3, separaten Versorgungskreis 17 gekoppelt, wobei hier und vorzugsweise der separate Versorgungskreis 17 der Arbeitshydraulik des Fahrzeugs zugeordnet ist. Denkbar ist auch, dass hier ein hydrostatischer Kreislauf Anwendung findet, der beispielsweise einen Lüfter o. dgl. versorgt. Alternativ oder zusätzlich kann es vorgesehen sein, dass der separate Versorgungskreis 17 eine eigene Hydrostatpumpe o. dgl. aufweist. In allen Fällen ist es in einer einfachen Variante so, dass der separate Versorgungskreis 17 einen hydraulischen Druck P_{I} bereitstellt, der über ein Proportional-Druckbegrenzungsventil 18 und ein Rückschlagventil 19 mit dem Bremskreis 8a der Anhängerbremse 8 gekoppelt ist.

Das Proportional-Druckbegrenzungsventil 18 ist über eine elektrische Kopplung 20 mit der Fahrzeugsteuerung 11 verbunden, so dass die Beaufschlagung des Bremskreises 8a der Anhängerbremse 8 mit Versorgungsdruck P_{I} gemäß der oben angesprochenen Übertragungsfunktion Uᵢ bewerkstelligt werden kann.

Fig. 2 zeigt auch, wie das Brems-Bedienelement 9 auf die hier ein Potentiometer 10a aufweisende Sensoranordnung 10 wirkt, wobei das Potentiometer 10a über eine elektrische Kopplung 21 mit der Fahrzeugsteuerung 11 gekoppelt ist.

Aus der in obiger Weise nachgelagerten Betätigung der Betriebsbremse 3 nach der Inchbremse ergibt sich die in Fig. 3 dargestellte Anhängerbremsung b_{A} in Abhängigkeit von der Auslenkung A des Bremsbedienelements 9. Bei der Auslenkung A handelt es sich um den aktuellen Auslenkwinkel des Pedalelements 9a, während es sich bei der Anhängerbremsung b_{A} um einen Wert für das durch die Anhängerbremse 7 aktuell bereitgestellte Brems-Drehmoment handelt.

Im Auslenkbereich A_{IB} erfolgt ausschließlich eine Inchbremsung, die hier und vorzugsweise proportional zu der Auslenkung A erfolgt. Gleichzeitig führt die Inchbremsung zu einer Anhängerbremsung b_{A}, was bei dem in Fig. 3 dargestellten Diagramm auf eine lineare Übertragungsfunktion Uᵢ zurückgeht. Bei einem Auslenken des Brems-Bedienelements 9 über den Auslenkbereich A_{IB} hinaus kommt hier und vorzugsweise zusätzlich die Betriebsbremse 3 in Funktion. U.a. durch die hier und vorzugsweise zusätzlich wirkende, betriebsbremsenbedingte Anhängerbremsung ergibt sich insgesamt ein steilerer Kurvenverlauf, wie aus der Darstellung gemäß Fig. 3 ersichtlich ist.

Interessant bei der Darstellung gemäß Fig. 3 ist die Tatsache, dass eine Kurvenschar Uᵢ mit i=1,2,3,4 gezeigt ist. Dies bedeutet hier, dass je nach Anhängerlast eine unterschiedliche Übertragungsfunktion Uᵢ zur Anwendung kommt. Vorteilhafterweise ist bei höherer Anhängerlast eine entsprechend steilere Übertragungsfunktion Uᵢ vorgesehen. Bemerkenswert dabei ist die in Fig. 3 steilste Übertragungsfunktion U₄, bei der die Anhängerbremse 7 in eine Art Sättigung geht, noch bevor die Betriebsbremse 3 in Aktion kommt. Die Auswahl bzw. Parametrierung der jeweiligen Übertragungsfunktion Uᵢ durch die Fahrzeugsteuerung 11 wurde weiter oben bereits angesprochen.

Nach einer weiteren Lehre, der ebenfalls eigenständige Bedeutung zukommt, wird ein Lastzug 22 mit einem vorschlagsgemäßen Fahrzeug 1 und mindestens einem an das vorschlagsgemäße Fahrzeug 1 angekoppelten Anhänger 7 beansprucht. Auf alle Ausführungen zu dem vorschlagsgemäßen Fahrzeug darf verwiesen werden.

Nach einer weiteren Lehre, der ebenfalls eigenständige Bedeutung zukommt, wird ein Verfahren für den Betrieb eines vorschlagsgemäßen Fahrzeugs 1 mit einem hydrostatischen Fahrantrieb 2 und einer Betriebsbremse 3 beansprucht. Auch diesbezüglich darf auf alle Ausführungen zu dem Betrieb des vorschlagsgemäßen Fahrzeugs 1 verwiesen werden.

### Bezugszeichenliste:

- 1: Fahrzeug
- 2: hydrostatischer Fahrantrieb
- 3: Betriebsbremse
- 3a: Bremskreis
- 4: Hydrostatgetriebe
- 5: Hydrostatpumpe
- 6: Hydrostatmotor
- 7: Anhänger
- 8: Anhängerbremse
- 8a: Bremskreis
- U: Übertragungsfunktion
- 9: Brems-Bedienelement
- 10: Sensoranordnung
- 10a: Potentiometer
- 11: Fahrzeugsteuerung
- 12,13,14,15: Pfeile
- 16: Rückschlagventil Bremse
- 17: Versorgungskreis
- 18: Proportionalventil
- 19: Rückschlagventil
- 20: elektrische Kopplung
- 21: elektrische Kopplung
- 22: Lastzug

## Patentansprüche

1. Fahrzeug mit einem hydrostatischen Fahrantrieb (2) und einer Betriebsbremse (3), wobei der Fahrantrieb (2) im Fahrantriebsstrang ein Hydrostatgetriebe (4) aufweist, wobei das Hydrostatgetriebe (4) die Funktion einer Inchbremse bereitstellt, wobei die Inchbremse jedenfalls auch separat von der Betriebsbremse (3) betätigbar ist und wobei ein Anhänger (7) mit einer vom Fahrzeug (1) aus betätigbaren Anhängerbremse (8) an das Fahrzeug (1) ankoppelbar ist,
**dadurch gekennzeichnet,**
**dass** zumindest in einem vorbestimmten Betriebsmodus und bei angekoppeltem Anhänger (7) eine Inchbremsung als solche eine vorbestimmte Anhängerbremsung auslöst, wobei ein auslenkbares Brems-Bedienelement (9) zur bedienerseitigen Inchbetätigung und ggf. zur bedienerseitigen Betätigung der Betriebsbremse vorgesehen ist, und wobei einer bedienerseitigen Betriebsbremsung mittels des Brems-Bedienelements (9) stets eine Inchbremsung und damit eine entsprechende Anhängerbremsung vorausgeht.

2. Fahrzeug nach Anspruch 1, **dadurch gekennzeichnet, dass** die Anordnung so getroffen ist, dass die inchbremsenbedingte Anhängerbremsung zumindest phasenweise in einem im Wesentlichen proportionalen Zusammenhang zu der auslösenden Inchbremsung, vorzugsweise zu einer entsprechenden bedienerseitigen Inchbetätigung, steht.

3. Fahrzeug nach Anspruch 1 oder 2, **dadurch gekennzeichnet, dass** das Brems-Bedienelement (9), ein Bremshebel oder ein Bremspedal ist, und vorzugsweise, dass die inchbremsenbedingte Anhängerbremsung zumindest phasenweise in einem im Wesentlichen proportionalen Zusammenhang zu der Auslenkung (A) des Brems-Bedienelements (9) steht.

4. Fahrzeug nach Anspruch 3, **dadurch gekennzeichnet, dass** dem Brems-Bedienelement (9) eine elektrische Sensoranordnung (10) zur sensorischen Erfassung der Auslenkung (A) des Brems-Bedienelements (9) zugeordnet ist, vorzugsweise, dass die Sensoranordnung (10) einen Absolutsensor, insbesondere nach Art eines Potentiometers oder eines MR-Sensors, aufweist, oder, dass die Sensoranordnung (10) einen inkrementellen Sensor, insbesondere nach Art eines Hall-Sensors o. dgl., aufweist.

5. Fahrzeug nach Anspruch 4, **dadurch gekennzeichnet, dass** eine elektrische Fahrzeugsteuerung (11) vorgesehen ist, die mit der Sensoranordnung (10) gekoppelt ist und die eine Anhängerbremsung nach einer vorbestimmten Übertragungsfunktion (Uᵢ) in Abhängigkeit von einer Inchbremsung und ggf. in Abhängigkeit von einer Betriebsbremsung, insbesondere in Abhängigkeit von den Sensordaten der Sensoranordnung (10), auslöst.

6. Fahrzeug nach Anspruch 5, **dadurch gekennzeichnet, dass** die Fahrzeugsteuerung (11) als Basis für die Ermittlung der auszulösenden Anhängerbremsung in Abhängigkeit von mindestens einem bremsrelevanten Einflußfaktor eine Übertragungsfunktion (Uᵢ) aus einer Anzahl gespeicherter Übertragungsfunktionen (Uᵢ) auswählt und/oder eine Parametrierung der ggf. ausgewählten Übertragungsfunktion (Uᵢ) vornimmt.

7. Fahrzeug nach Anspruch 6, **dadurch gekennzeichnet, dass** eine Sensoranordnung (10) zur sensorischen Ermittlung der aktuellen Anhängerlast oder ein Einstell-Bedienelement zur bedienerseitigen Einstellung der akuellen Anhängerlast vorgesehen ist und dass die Fahrzeugsteuerung (11) die Sensordaten der Sensoranordnung (10) oder die Stellung des Einstell-Bedienelements als bremsrelevanten Einflußfaktor auswertet.

8. Fahrzeug nach Anspruch 3 und ggf. nach einem der Ansprüche 4 bis 7, **dadurch gekennzeichnet, dass** eine Auslenkung des Brems-Bedienelements (9) über einen ersten Auslenkbereich (A_{IB}) eine Inchbetätigung ist und dass eine weitergehende Auslenkung des Brems-Bedienelements (9) über einen zweiten Auslenkbereich (A_{BB}), vorzugsweise zusätzlich zu der Inchbetätigung, eine Betätigung der Betriebsbremse (3) ist, vorzugsweise, dass eine Auslenkung des Brems-Bedienelements (9) in beiden Auslenkbereichen (A_{IB}, A_{BB}) jedenfalls eine Inchbetätigung ist.

9. Fahrzeug nach einem der vorhergehenden Ansprüche, **dadurch gekennzeichnet, dass** eine Betriebsbremsung als solche eine vorbestimmte Anhängerbremsung auslöst und dass die betriebsbremsenbedingte Anhängerbremsung unabhängig von der inchbremsenbedingten Anhängerbremsung auslösbar ist.

10. Fahrzeug nach einem der vorhergehenden Ansprüche, **dadurch gekennzeichnet, dass** die betriebsbremsenbedingte Anhängerbremsung und die inchbremsenbedingte Anhängerbremsung auf unterschiedliche Versorgungskreise zurückgehen.

11. Fahrzeug nach einem der vorhergehenden Ansprüche, **dadurch gekennzeichnet, dass** für die betriebsbremsenbedingte Anhängerbremsung bei angekoppeltem Anhänger (7) der Bremskreis (8a) der Anhängerbremse (8) an den Bremskreis (3a) der Betriebsbremse (3) gekoppelt ist, vorzugsweise, dass die Kopplung unidirektional von dem Bremskreis (3a) der Betriebsbremse (3) zu dem Bremskreis (8a) der Anhängerbremse (8) hin vorgesehen ist.

12. Fahrzeug nach einem der vorhergehenden Ansprüche, **dadurch gekennzeichnet, dass** für die inchbremsenbedingte Anhängerbremsung der Bremskreis (8a) der Anhängerbremse (8) an einen von der Betriebsbremse (3), insbesondere vom Bremskreis (3a) der Betriebsbremse (3), separaten Versorgungskreis (17) gekoppelt ist, vorzugsweise, dass der separate Versorgungskreis (17) der Arbeitshydraulik des Fahrzeugs zuzuordnen ist, und/oder, dass der separate Versorgungskreis (17) eine eigene Hydrostatpumpe aufweist.

13. Lastzug mit einem Fahrzeug (1) und mindestens einem an das Fahrzeug (1) angekoppelten Anhänger (7), vorzugsweise mit einem Fahrzeug (1) nach einem der vorhergehenden Ansprüche, wobei das Fahrzeug (1) einen hydrostatischen Fahrantrieb (2) und eine Betriebsbremse (3) aufweist, wobei der Fahrantrieb (2) im Fahrantriebsstrang ein Hydrostatgetriebe (4) aufweist, wobei das Hydrostatgetriebe (4) die Funktion einer Inchbremse bereitstellt, wobei die Inchbremse jedenfalls auch separat von der Betriebsbremse (3) betätigbar ist und wobei der Anhänger (7) eine vom Fahrzeug (1) aus betätigbare Anhängerbremse (8) aufweist,
**dadurch gekennzeichnet,**
**dass** zumindest in einem vorbestimmten Betriebsmodus eine Inchbremsung als solche eine vorbestimmte Anhängerbremsung auslöst, wobei ein auslenkbares Brems-Bedienelement (9) zur bedienerseitigen Inchbetätigung und ggf. zur bedienerseitigen Betätigung der Betriebsbremse vorgesehen ist, und wobei einer bedienerseitigen Betriebsbremsung mittels des Brems-Bedienelements (9) stets eine Inchbremsung und damit eine entsprechende Anhängerbremsung vorausgeht.

14. Verfahren für den Betrieb eines Fahrzeugs (1) mit einem hydrostatischen Fahrantrieb (2) und einer Betriebsbremse (3), vorzugsweise eines Fahrzeugs (1) nach einem der Ansprüche 1 bis 13, wobei der Fahrantrieb (2) im Fahrantriebsstrang ein Hydrostatgetriebe (4) aufweist, wobei das Hydrostatgetriebe (4) die Funktion einer Inchbremse bereitstellt, wobei die Inchbremse jedenfalls auch separat von der Betriebsbremse (3) betätigbar ist und wobei ein Anhänger (7) mit einer vom Fahrzeug (1) aus betätigbaren Anhängerbremse (8) an das Fahrzeug (1) angekoppelt ist,
**dadurch gekennzeichnet,**
**dass** zumindest in einem vorbestimmten Betriebsmodus und bei angekoppeltem Anhänger (7) durch eine Inchbremsung als solcher eine vorbestimmte Anhängerbremsung ausgelöst wird, wobei ein auslenkbares Brems-Bedienelement (9) zur bedienerseitigen Inchbetätigung und ggf. zur bedienerseitigen Betätigung der Betriebsbremse vorgesehen ist, und wobei einer bedienerseitigen Betriebsbremsung mittels des Brems-Bedienelements (9) stets eine Inchbremsung und damit eine entsprechende Anhängerbremsung vorausgeht.

## Claims

1. A vehicle comprising a hydrostatic travel drive (2) and a service brake (3), wherein the travel drive (2) has a hydrostatic transmission (4) in the travel drive train, wherein the hydrostatic transmission (4) performs the function of an inching brake, wherein the inching brake is at any event also operable separately from the service brake (3) and wherein a trailer (7) having a trailer brake (8) actuable from the vehicle (1) can be coupled to the vehicle (1),
**characterised in that** at least in a predetermined operating mode and with a trailer (7) coupled an inching braking as such triggers a predetermined trailer braking, wherein a deflectable brake operating element (9) is provided for operator-side inching actuation and possibly for operator-side actuation of the service brake, and wherein an inching braking and thus a corresponding trailer braking always precedes an operator-side service braking by means of the brake operating element (9).

2. A vehicle according to claim 1 **characterised in that** the arrangement is such that the inching brake-governed trailer braking is at least phase-wise in a substantially proportional relationship with the inching braking to be triggered, preferably in relation to a corresponding operator-side inching actuation.

3. A vehicle according to claim 1 or claim 2 **characterised in that** the brake operating element (9) is a brake lever or a brake pedal, and preferably that the inching brake-governed trailer braking is at least phase-wise in a substantially proportional relationship with the deflection (A) of the brake operating element (9).

4. A vehicle according to claim 3 **characterised in that** an electrical sensor arrangement (10) for sensor detection of the deflection (A) of the brake operating element (9) is associated with the brake operating element (9), and preferably that the sensor arrangement (10) has an absolute sensor, in particular in the manner of a potentiometer or an MR sensor, or that the sensor arrangement (10) has an incremental sensor, in particular in the manner of a Hall sensor or the like.

5. A vehicle according to claim 4 **characterised in that** there is provided an electrical vehicle control (11) which is coupled to the sensor arrangement (10) and which triggers trailer braking in accordance with a predetermined transmission function (Uᵢ) in dependence on an inching braking and possibly in dependence on a service braking, in particular in dependence on the sensor data from the sensor arrangement (10).

6. A vehicle according to claim 5 **characterised in that** the vehicle control (11) as a basis for ascertaining the trailer braking to be triggered in dependence on at least one brake-relevant influencing factor selects a transmission function (Uᵢ) from a number of stored transmission functions (Uᵢ) and/or implements parametrisation of the possibly selected transmission function (Uᵢ).

7. A vehicle according to claim 6 **characterised in that** there is provided a sensor arrangement (10) for sensor ascertaining the current trailer load or a setting operating element for operator-side setting of the current trailer load and that the vehicle control (11) evaluates the sensor data from the sensor arrangement (10) or the position of the setting operating element as a brake-relevant influencing factor.

8. A vehicle according to claim 3 and possibly according to one of claims 4 to 7 **characterised in that** a deflection of the brake operating element (9) over a first deflection region (A_{IB}) is an inching actuation and that a more extensive deflection of the brake operating element (9) over a second deflection region (A_{BB}), preferably in addition to the inching actuation, is an actuation of the service brake (3), preferably that deflection of the brake operating element (9) in both deflection regions (A_{IB}, A_{BB}) is at any event an inching actuation.

9. A vehicle according to one of the preceding claims **characterised in that** a service braking as such triggers a predetermined trailer braking and that the service brake-governed trailer braking can be triggered independently of the inching brake-governed trailer braking.

10. A vehicle according to one of the preceding claims **characterised in that** the service brake-governed trailer braking and the inching brake-governed trailer braking stem from different supply circuits.

11. A vehicle according to one of the preceding claims **characterised in that** for service brake-governed trailer braking with a trailer (7) coupled to the vehicle the brake circuit (8a) of the trailer brake (8) is coupled to the brake circuit (3a) of the service brake (3), preferably that the coupling is provided unidirectionally from the brake circuit (3a) of the service brake (3) towards the brake circuit (8a) of the trailer brake (8).

12. A vehicle according to one of the preceding claims **characterised in that** for the inching brake-governed trailer braking the brake circuit (8a) of the trailer brake (8) is coupled to a supply circuit (17) separate from the service brake (3), in particular from the brake circuit (3a) of the service brake (3), preferably that the separate supply circuit (17) is to be associated with the operating hydraulics of the vehicle and/or that the separate supply circuit (17) has its own hydrostatic pump.

13. A road train comprising a vehicle (1) and at least one trailer (7) coupled to the vehicle (1), preferably a vehicle (1) according to one of the preceding claims, wherein the vehicle (1) has a hydrostatic travel drive (2) and a service brake (3), wherein the travel drive (2) has a hydrostatic transmission (4) in the travel drive train, wherein the hydrostatic transmission (4) performs the function of an inching brake, wherein the inching brake is at any event also operable separately from the service brake (3) and wherein the trailer (7) has a trailer brake (8) actuable from the vehicle (1),
**characterised in that** at least in a predetermined operating mode an inching braking as such triggers a predetermined trailer braking, wherein a deflectable brake operating element (9) is provided for operator-side inching actuation and possibly for operator-side actuation of the service brake, and wherein an inching braking and thus a corresponding trailer braking always precedes an operator-side service braking by means of the brake operating element (9).

14. A method of operating a vehicle (1) comprising a hydrostatic travel drive (2) and a service brake (3), preferably a vehicle (1) according to one of claims 1 to 13, wherein the travel drive (2) has a hydrostatic transmission (4) in the travel drive train, wherein the hydrostatic transmission (4) performs the function of an inching brake, wherein the inching brake can at any event also be actuated separately from the service brake (3) and wherein a trailer (7) having a trailer brake (8) actuable from the vehicle (1) is coupled to the vehicle (1),
**characterised in that**
at least in a predetermined operating mode and with a coupled trailer (7) a predetermined trailer braking is triggered by an inching braking as such, wherein there is provided a deflectable brake operating element (9) for operator-side inching actuation and possibly for operator-side actuation of the service brake, and wherein inching braking and thus corresponding trailer braking always precedes an operator-side service braking by means of the brake operating element (9).

## Revendications

1. Véhicule comprenant une transmission hydrostatique (2) et un frein de service (3), la transmission (2) comprenant sur la chaîne de transmission une boîte de vitesses hydrostatique (4), la boîte de vitesses hydrostatique (4) remplissant la fonction d'un frein « inch », le frein « inch » étant en tout cas également actionnable séparément du frein de service (3), et une remorque (7) avec un frein de remorque (8) actionnable depuis le véhicule (1) pouvant être couplée au véhicule (1), **caractérisé en ce que**, au moins dans un mode de fonctionnement prédéterminé et avec une remorque (7) couplée, un freinage « inch » en tant que tel déclenche un freinage de remorque prédéterminé, un élément d'actionnement de frein à débattement (9) étant prévu pour l'actionnement « inch » côté utilisateur et, le cas échéant, pour l'actionnement du frein de service côté utilisateur, et un freinage de service côté utilisateur au moyen de l'élément d'actionnement de frein (9) étant toujours précédé par un freinage « inch » et donc par un freinage de remorque correspondant.

2. Véhicule selon la revendication 1, **caractérisé en ce que** l'agencement est prévu de façon que le freinage de remorque dû au frein « inch » s'établit, au moins par phases, dans un rapport sensiblement proportionnel avec le freinage « inch » déclenchant, de préférence avec un actionnement « inch » correspondant côté utilisateur.

3. Véhicule selon la revendication 1 ou 2, **caractérisé en ce que** l'élément d'actionnement de frein (9) est un levier de frein ou une pédale de frein, et de préférence **en ce que** le freinage de remorque dû au frein « inch » s'établit, au moins par phases, dans un rapport sensiblement proportionnel avec le débattement (A) de l'élément d'actionnement de frein (9).

4. Véhicule selon la revendication 3, **caractérisé en ce qu'**à l'élément d'actionnement de frein (9) est associé un agencement de capteur électrique (10) pour la détection électrique du débattement (A) de l'élément d'actionnement de frein (9), de préférence **en ce que** l'agencement de capteur (10) comprend un capteur absolu, en particulier à la façon d'un potentiomètre ou d'un capteur MR, ou en ce que l'agencement de capteur (10) comprend un capteur incrémentiel, en particulier à la façon d'un capteur Hall ou analogue.

5. Véhicule selon la revendication 4, **caractérisé en ce qu'**est prévue une commande électrique de véhicule (11) qui est couplée à l'agencement de capteur (10) et qui déclenche un freinage de remorque selon une fonction de transfert prédéterminée (U₁) en fonction d'un freinage « inch » et, le cas échéant, en fonction d'un freinage de service, en particulier en fonction des données de capteur de l'agencement de capteur (10).

6. Véhicule selon la revendication 5, **caractérisé en ce que** la commande de véhicule (11) sélectionne comme base pour la détermination du freinage de remorque à déclencher, en fonction d'au moins un facteur d'influence intéressant les freins, une fonction de transfert (U₁) à partir d'une pluralité de fonctions de transfert (U₁) mémorisées et/ou procède à un paramétrage de la fonction de transfert (U₁) éventuellement sélectionnée.

7. Véhicule selon la revendication 6, **caractérisé en ce qu'**il est prévu un agencement de capteur (10) pour la détermination par capteur de la charge de remorque instantanée ou un élément d'actionnement réglable pour le réglage, côté utilisateur, de la charge de remorque instantanée, et **en ce que** la commande de véhicule (11) analyse, comme facteur d'influence intéressant les freins, les données de capteur de l'agencement de capteur (10) ou la position de l'élément d'actionnement réglable.

8. Véhicule selon la revendication 3 et, le cas échéant, selon une des revendications 4 à 7, **caractérisé en ce qu'**un débattement de l'élément d'actionnement de frein (9) sur une première plage de débattement (A_{IB}) est un actionnement « inch », et **en ce qu'**un débattement ultérieur de l'élément d'actionnement de frein (9) sur une seconde plage de débattement (A_{BB}), de préférence en plus de l'actionnement « inch », est un actionnement du frein de service (3), de préférence **en ce qu'**un débattement de l'élément d'actionnement de frein (9) dans les deux plages de débattement (A_{IB}, A_{BB}) est en tout cas un actionnement « inch ».

9. Véhicule selon une des revendications précédentes, **caractérisé en ce qu'**un freinage de service en tant que tel déclenche un freinage de remorque prédéterminé, et **en ce que** le freinage de remorque dû au frein de service est déclenchable indépendamment du freinage de remorque dû au frein « inch ».

10. Véhicule selon une des revendications précédentes, **caractérisé en ce que** le freinage de remorque dû au frein de service et le freinage de remorque dû au frein « inch » font appel à des circuits d'alimentation différents.

11. Véhicule selon une des revendications précédentes, **caractérisé en ce que**, pour le freinage de remorque dû au frein de service, avec remorque couplée (7), le circuit de freinage (8a) du frein de remorque (8) est couplé au circuit de freinage (3a) du frein de service (3), de préférence **en ce que** le couplage est prévu de façon unidirectionnelle depuis le circuit de freinage (3a) du frein de service (3) vers le circuit de freinage (8a) du frein de remorque (8).

12. Véhicule selon une des revendications précédentes, **caractérisé en ce que**, pour le freinage de remorque dû au frein « inch », le circuit de freinage (8a) du frein de remorque (8) est couplé à un circuit d'alimentation (17) séparé du frein de service (3), en particulier du circuit de freinage (3a) du frein de service (3), de préférence **en ce que** le circuit d'alimentation séparé (17) est à associer au circuit hydraulique de fonctionnement du véhicule, et/ou **en ce que** le circuit d'alimentation séparé (17) comporte une pompe hydrostatique.

13. Train routier comprenant un véhicule (1) et au moins une remorque (7) couplée au véhicule (1), de préférence comprenant un véhicule (1) selon une des revendications précédentes, le véhicule (1) comprenant une transmission hydrostatique (2) et un frein de service (3), la transmission (2) comprenant sur la chaîne de transmission une boîte de vitesses hydrostatique (4), la boîte de vitesses hydrostatique (4) remplissant la fonction d'un frein « inch », le frein « inch » étant en tout cas également actionnable séparément du frein de service (3), et la remorque (7) comportant un frein de remorque (8) actionnable depuis le véhicule (1), **caractérisé en ce que**, au moins dans un mode de fonctionnement prédéterminé, un freinage « inch » en tant que tel déclenche un freinage de remorque prédéterminé, un élément d'actionnement de frein à débattement (9) étant prévu pour l'actionnement « inch » côté utilisateur et, le cas échéant, pour l'actionnement du frein de service côté utilisateur, et un freinage de service côté utilisateur au moyen de l'élément d'actionnement de frein (9) étant toujours précédé par un freinage « inch » et donc par un freinage de remorque correspondant.

14. Procédé pour le fonctionnement d'un véhicule (1) comprenant une transmission hydrostatique (2) et un frein de service (3), de préférence d'un véhicule selon une des revendications 1 à 13, la transmission (2) comprenant sur la chaîne de transmission une boîte de vitesses hydrostatique (4), la boîte de vitesses hydrostatique (4) remplissant la fonction d'un frein « inch », le frein « inch » étant en tout cas également actionnable séparément du frein de service (3), et une remorque (7) avec un frein de remorque (8) actionnable depuis le véhicule (1) étant couplée au véhicule (1), **caractérisé en ce que**, au moins dans un mode de fonctionnement prédéterminé et avec une remorque (7) couplée, un freinage de remorque prédéterminé est déclenché par un freinage « inch » en tant que tel, un élément d'actionnement de frein à débattement (9) étant prévu pour l'actionnement « inch » côté utilisateur et, le cas échéant, pour l'actionnement du frein de service côté utilisateur, et un freinage de service côté utilisateur au moyen de l'élément d'actionnement de frein (9) étant toujours précédé par un freinage « inch » et donc par un freinage de remorque correspondant.
